(19) Europäisches Patentamt
European Patent Office
Office européen des brevets

(11) Publication number: 0 062 421 B1

(12) **EUROPEAN PATENT SPECIFICATION**

(45) Date of publication of patent specification: **16.01.85**

(51) Int. Cl.[4]: **F 16 B 21/02,** F 16 B 21/04

(21) Application number: **82301313.1**

(22) Date of filing: **15.03.82**

# (54) Fastener receptacle having press-in mounting.

(30) Priority: **06.04.81 US 251186**

(43) Date of publication of application:
**13.10.82 Bulletin 82/41**

(45) Publication of the grant of the patent:
**16.01.85 Bulletin 85/03**

(84) Designated Contracting States:
**DE FR GB**

(56) References cited:
**EP-A-0 018 809**
**GB-A-1 180 962**
**GB-A-1 200 049**
**GB-A-1 200 050**
**GB-A-1 381 917**
**US-A-4 145 794**

(73) Proprietor: **DZUS FASTENER EUROPE LIMITED**
**Farnham Trading Estate**
**Farnham Surrey, GU9 9PL (GB)**

(72) Inventor: **Gunther, Conrad Joseph**
**260, Bedford Avenue**
**Uniondale New York, 11553 (US)**

(74) Representative: **Brunner, Michael John et al**
**GILL JENNINGS & EVERY 53-64 Chancery Lane**
**London WC2A 1HN (GB)**

**EP 0 062 421 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to the receptacle of a quick release fastener. Quick release fasteners of the helical cam type are well known and have been in use for many years. These fasteners generally consist of a fastener stud having a head with a dependent shank having a helical slot extending inwardly from the outer end thereof and terminating in a locking shoulder. Upon rotation, usually through a quarter turn, a fastener stud can be interengaged with a spring or receptacle. Fasteners of this type are disclosed in U.S. Patent No. 1,955,740. Various types of receptacles having locking bars or springs for interengagement with the stud and disposed within a casing have been provided in the past, as shown for instance in U.S. Patents Nos. 2,337,457, 2,347,675, 2,424,603, 2,527,408, 2,547,155 and 4,227,287.

For our present purposes, these fastener receptacles have certain disadvantages. Thus, some of them require riveting for installation, which is expensive and time consuming. Others do not have a completely sealed enclosure and accordingly do not provide protection against dust, weather and radiofrequency electromagnetic leakage; while still others require considerable space for installing on the supporting member.

According to the present invention a fastener receptacle of a quick release fastener for providing protection against dust, weather and radiofrequency leakage and of the type having an interengageable receptacle and a stud having a head and a dependent shank with a helical cam slot formed with a locking shoulder extending inwardly from the free end thereof, the fastener receptacle including locking means for engaging the helical cam slot of the stud in use, the locking means being urged in the direction away from the head of the stud by a spring, and comprising a cylindrical casing, is characterized in that the cylindrical wall portion of the casing has a sealing cap enclosing the end of the casing away from the head of the stud, and is formed with a shoulder having a serrated toothed ring, a groove and rib immediately adjacent the shoulder providing a self-clinching press-in mounting means at the end of the cylindrical wall remote from the cap.

Such a fastener receptacle is simple to install, occupies a minimum of space and provides an enclosed protection against dust and weather and can minimize radiofrequency leakage.

Preferably, a locking bar extends diametrically across the cylindrical wall with its ends disposed in longitudinal slots on the opposite sides of the casing, a helical spring within the casing extending between a shoulder in the lower portion of the casing and the locking bar to press the bar towards the outer end of the slots, the bar being shifted downwardly in the slots against the force exerted by the spring when it is engaged by the cam slot in the stud.

Two examples of receptacles constructed in accordance with the present invention will now be described with reference to the accompanying drawings in which:—

Figure 1 is an exploded view of a first fastener receptacle;

Figure 1A is a detailed view of a portion of the lower end of the receptacle of Figure 1 illustrating the self-clinching press-in mounting;

Figure 2 is an elevational view, partially in section, of a helical cam fastener stud mounted on a removable panel and of the assembled receptacle of the type shown in Figure 1 mounted on a support, with the stud and receptacle disengaged;

Figure 3 is a longitudinal sectional view through the receptacle showing the stud engaged in locked position;

Figure 4 is also a longitudinal sectional view of the assembled fastener stud and receptacle shown at right angles and in the direction of the arrows on the line 4—4 of Figure 3;

Figure 5 is a plan view of the assembled fastener as viewed from above in Figure 3;

Figure 6 is a plan view of the assembled fastener as viewed from below in Figure 3;

Figure 7 is an exploded view of a second fastener receptacle; and,

Figures 8, 9, 10, 11 and 12 are views similar to Figures 2, 3, 4, 5 and 6 but showing the second type fastener receptacle.

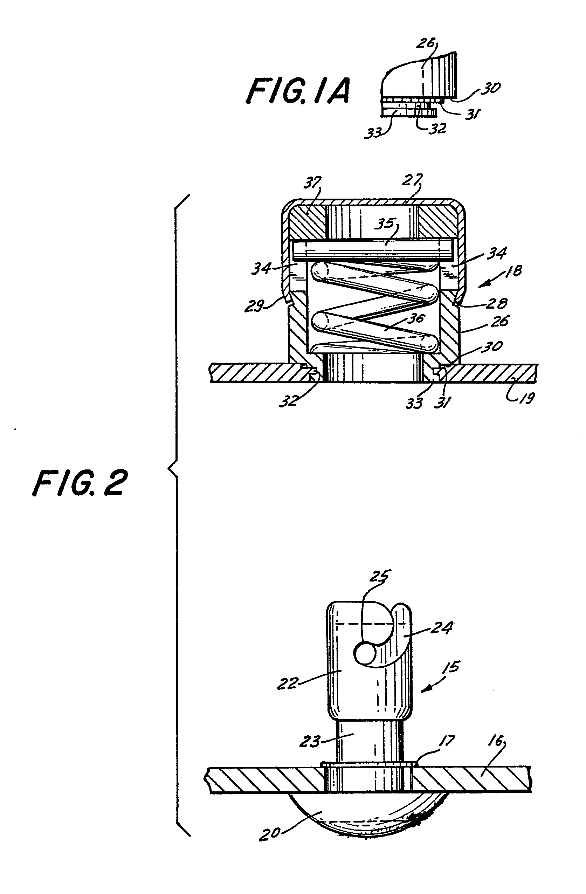

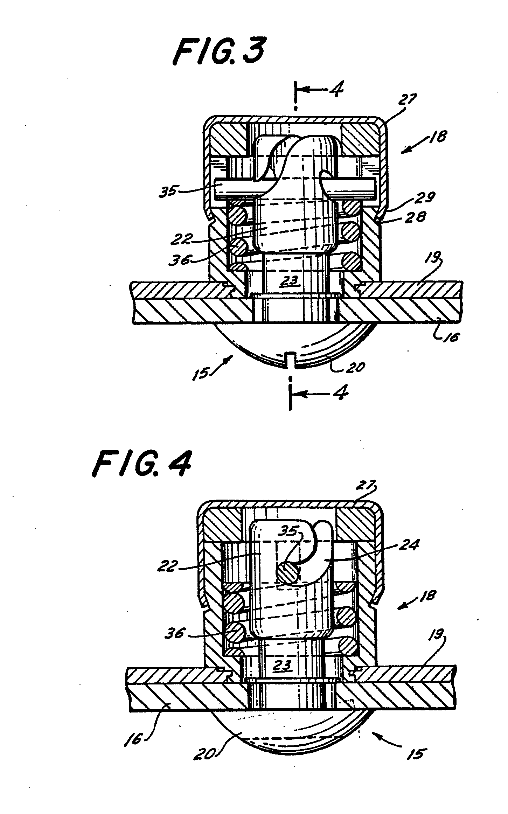

The first fastener comprises a stud member 15 (see Figure 2) mounted in an aperture in a panel 16 by suitable means, such as a snap ring 17, and a receptacle 18 fixedly mounted in an aperture in a support 19. The stud and receptacle can be engaged and locked in the manner shown in Figures 3 and 4 by inserting the end of the stud through the aperture in the support into the receptacle and rotating the stud in a clockwise direction for one quarter of a turn, and can be released by rotating the stud in a counterclockwise direction for one quarter of a turn. The stud 15 is of well known construction and consists of a head portion 20 which may have a screwdriver slot or kerf formed therein and having a dependent shank portion 22 with a restricted neck portion 23 around which the snap ring 17 is assembled after the stud is inserted through the aperture in the removable panel 16. Thus, the stud may rotate in the panel but is held assembled therewith by means of the snap ring. The outer end portion of the shank 22 is of cylindrical construction and a pair of diametrically opposed helical slots 24 are formed therein terminating in locking cams. The slots 24 extend to the axis of the stud and thus join together to form a single diametrical slot which is helically twisted.

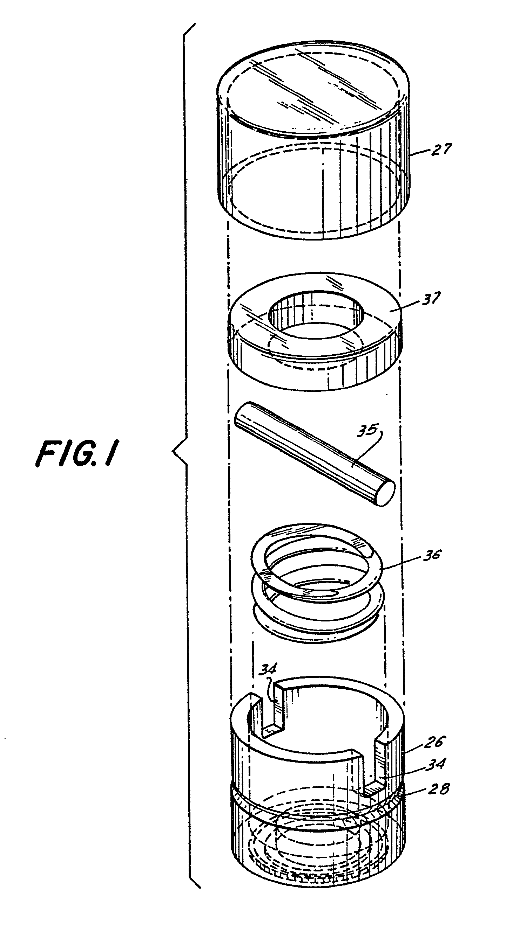

The receptacle comprises a casing formed of a cylindrical wall portion 26 and a cap portion 27 in sealed engagement with each other. For this purpose a groove 28 is formed around the outside of the cylindrical wall portion near its centre and the cap is assembled over the top of the wall portion and the lower end thereof is rolled or clinched into the groove 28 as shown at 29. As shown in Figure 1A, a shoulder 30 is formed near the lower end of the cylindrical wall portion 26 and a toothed ring 31 is formed around the lower portion of the shoulder with a groove 32 and rib 33 formed immediately beneath the toothed ring at the lower end of the cylindrical wall providing a self-clinching press-in mounted for the receptacle. Longitudinally extending slots 34 extend through the wall from the outer end of the cylindrical wall on diametrically opposite sides thereof.

A locking pin of bar 35 is positioned to extend diametrically across the casing with the ends thereof positioned and slidable in the slots 34. The locking pin or bar is normally urged towards the outer ends of the slots by means of a helical spring 36 disposed inside the casing and extending between the inner portion of the shoulder and the locking pin. A spacing ring 37 is positioned on the outer end of the circular wall closing the outer ends of the slots 34 and providing suitable clearance between the head of the cap and the locking ring so that the outer end of the cam stud 15 has suitable clearance when rotated between locked and unlocked positions.

In assembling the receptacle with the support 19, an aperture is formed in the support of the approximate diameter of the rib 33. The rib 33 and groove portion 32 at the lower end of the receptacle are inserted through the aperture and a sufficient downward force is exerted on the top of the cap 27 with a backing force applied to the opposite surface of support 19 to cause the toothed clinching ring 31 to press into the upper surface of the support and offsetting the material thereof into the groove 32, as shown in Figures 2, 3 and 4, thereby firmly clinching the receptacle in place in the support.

The cylindrical wall and cap of the casing are preferably made of a suitable metallic material so as to provide not only protection against dust in the atmosphere but also to minimize radiofrequency leakage. For this purpose, the cylindrical wall may be made of a heat treated alloy steel which may be protected as by zinc plating and the cap may be made of stainless steel. The spacer ring may also be made of zinc plated steel and the coil spring and locking pin may be made of spring tempered stainless steel.

When the stud and receptacle are assembled, as indicated with a removable panel 16 and support 19, they may be interengaged and locked by inserting the outer end of the stud through the aperture in the support into the receptacle until the cam slots 24 engage the locking pin 35. The stud is then rotated in a clockwise direction with the result that the locking pin 35 is drawn inwardly by the cam slots 24 until it is locked behind the locking shoulders or cams 25. The fastener may be unlocked by rotating the stud in a counter clockwise direction for one quarter of a turn. It will be seen that the spacer ring 37 provides suitable clearance for the end of the stud in operating the fastener. It also closes off the end of the slots 34 so as to retain the locking pin 35 in place.

If a sealed type of installation is desired, a compressible gasket may be inserted between the removable panel 16 and the support 19.

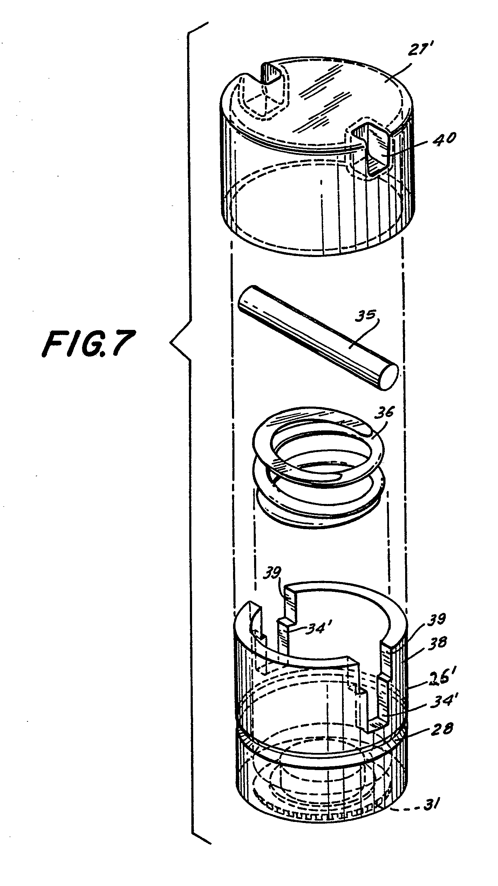

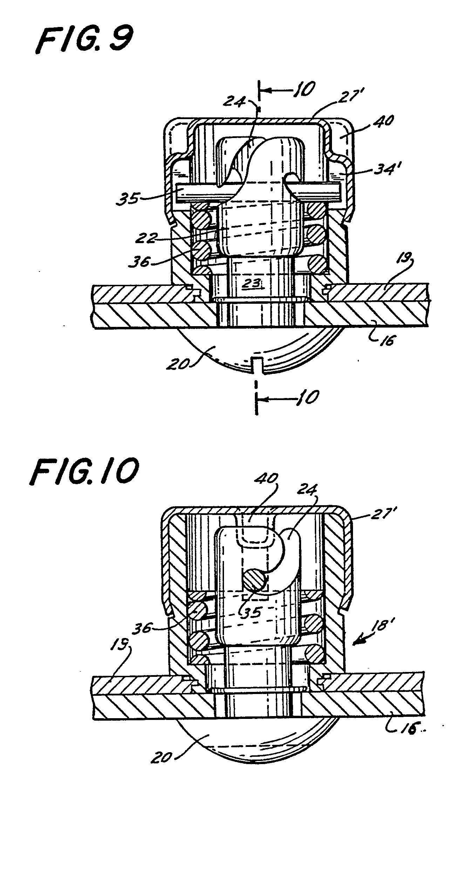

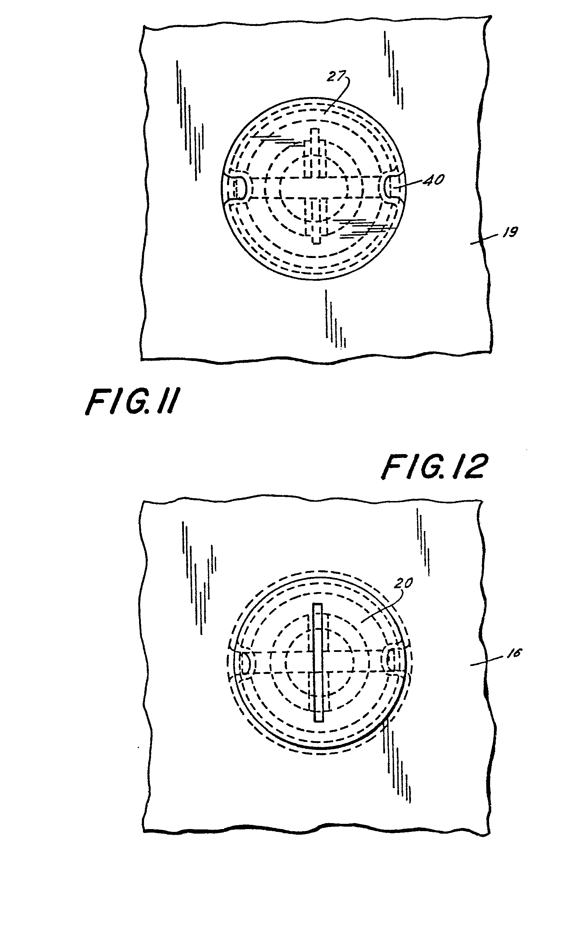

In the second fastener, shown in Figures 7—12, the stud assembly, consisting of the stud member 15, removable panel 16, and snap ring 17, may be the same as in the first form of my invention. The receptacle member 18′ is assembled with a suitable support 19 by means of the same type of self-clinching press-in mounting formed around the lower end of cylindrical wall portion 26′ and consisting of the same type of shoulder 30 and serrated toothed ring 31 formed around the surface of the shoulder with adjacent groove 32 and rib 33. Cap 27′ is secured over the top of the cylindrical wall portion 26′ and the lower end thereof is rolled or clinched into the groove 28 formed around the outside of the cylindrical wall near the centre thereof as indicated at 29. Locking pin or bar 35 is similarly disposed inside the casing extending between the diametrically opposed slots 34′ extending longitudinally of the side wall near but spaced from the upper end thereof. Helical spring 36 normally presses the locking pin or bar 35 towards the upper portion of the slots 34′.

In the form of receptacle shown in Figures 7—12 the spacer ring 37 is eliminated. Instead, the outer end of the cylindrical wall portion 26′ extends upwardly a sufficient distance to provide the necessary clearance space as shown at 38. The upward extension 38 of the cylindrical side wall is provided with diametrically opposed enlarged openings 39 communicating directly with the slots 34′. The cap 27′ is provided with diametrically opposed indentations 40 in the head portion thereof of a size to fit snugly into the openings 39 in the upward extension 38 of the cylindrical side wall. The indentations thus serve to position the cap and to close the upper end of the slots 34. The indentations also serve as a guide when installing the receptacle, as shown in Figure 12, so that all of the receptacles in an assembly can be mounted in similar relative rotary position so that the screw-driver slot in the fastener studs will all be in the same relative position when the fasteners are locked.

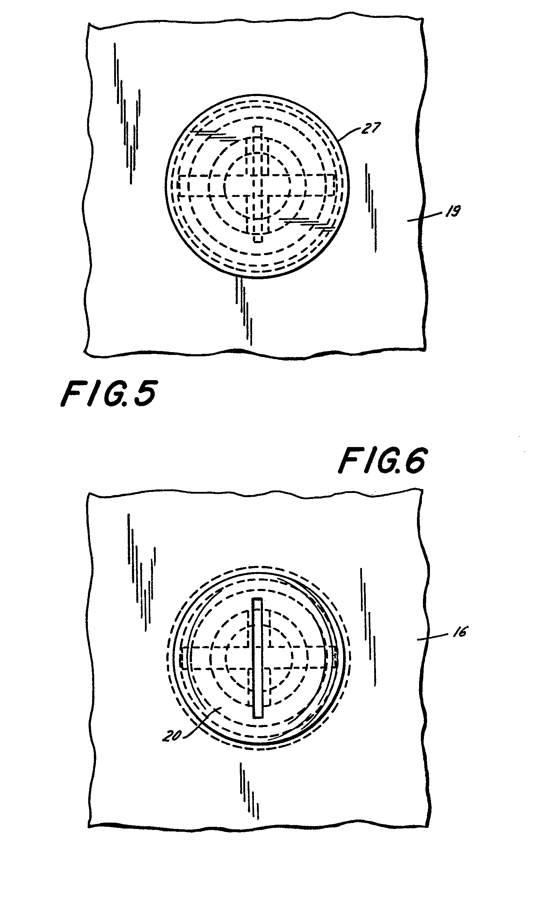

In the first receptacle shown in Figures 1 to 6, markings may be made in the head of the cap of the receptacle in place of the indentations 40 so that all of the receptacles in an assembly may be mounted in the same relative rotary position.

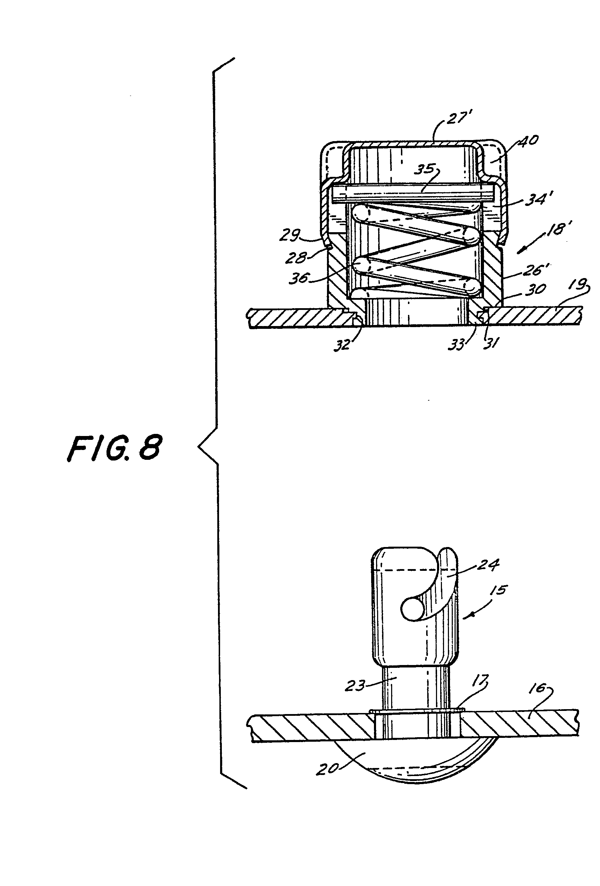

The receptacle of Figures 8—12 is assembled with the support 19 in the same manner as the first receptacle and when so assembled is firmly held in position against either rotation or release. The fastener stud is similarly engaged with the receptacle by inserting the end thereof through the aperture in the support into the receptacle until the cam slots 24 are engaged with the locking pin 35. Rotation of the stud for one quarter of a turn in a clockwise direction will then cause the locking pin to ride inwardly in the cam slots until it is locked behind the shoulders or cams. Rotation of the stud for one quarter turn in the opposite direction will disengage the fastener.

The modified receptacle 18′ may be made of similar materials as that indicated for the first form of receptacle.

Whilst the examples shown have a locking bar 35 for cooperation with the stud 15, the locking of the stud in the receptacles may alternatively be achieved by the use of a tab-plate. Such a tab-plate comprises a plate having a central aperture to receive the stud shank, the aperture having a pair of opposed tabs extending radially inwardly from diametrically opposite sides of the apertures, the tabs cooperating with the helical cam slots 24 in the stud 15. The tab plate also has outwardly extending tabs arranged to slide in the slots 34 in the cylindrical casing 26 to prevent its rotation therein. This enables a modified stud to be used in which the cam slots 24 are separate and are formed as grooves in the wall of the stud shank. This form of stud has therefore a central core in the shank which extends right to its end to provide additional strength.

## Claims

1. A fastener receptacle (18) of a quick release fastener for providing protection against dust, weather and radiofrequency leakage and of the type having an interengageable receptacle (18) and a stud (15) having a head (20) and a dependent shank (22) with a helical cam slot (24) formed with a locking shoulder (25) extending inwardly from the free end thereof, the fastener receptacle (18) including locking means (35) for engaging the helical cam slot (24) of the stud (15) in use, the locking means (35) being urged in the direction away from the head of the stud (15) by a spring (36), and comprising a cylindrical casing, characterized in that the cylindrical wall portion (26) of the casing has a sealing cap (27) enclosing the end of the casing away from the head of the stud (15), and is formed with a shoulder (30) having a serrated toothed ring (31), a groove (32) and rib (33) immediately adjacent the shoulder providing a self-clinching press-in mounting means at the end of the cylindrical wall portion adjacent the head of the stud.

2. A fastener receptacle according to claim 1, wherein the casing includes a pair of diametrically opposed longitudinally extending slots (34) formed therein near its end remote from the head of the stud (15), the locking means (35) having projecting portions disposed in the slots (34) in the wall so as to be shiftable along the slots when engaged by the cam slot of the stud; a helical spring (36) being disposed within the casing to bias the locking means (35) and extending between the inner portion of the shoulder (30) and the locking means.

3. A fastener receptacle according to claim 1 or claim 2, in which the locking means comprises a locking bar (35) extending diametrically across the casing.

4. A fastener receptacle according to claim 1 or claim 2, in which the locking means comprises a tab plate having a central aperture and a pair of diametrically opposed radially inwardly directed tabs for engagement with the cam slots (24) in the stud, and a further pair of diametrically opposed radially outwardly extending tabs engaging in respective ones of the longitudinal slots (34).

5. A fastener receptacle according to any of claims 1 to 4, in which spacing means (37) are provided between the top of the cap (27) and the cylindrical wall portion to provide clearance for the end of the fastener stud (15) when it is rotated between locked and unlocked positions.

6. A fastener receptacle according to claim 5, in which the slots (34) in the cylindrical wall portion extend to the end thereof and the spacing means consists of a ring (37) disposed around the inside of the cap (27) beyond the cylindrical wall portion so as to close the ends of the slots (34).

7. A fastener receptacle according to any of claims 1 to 4, in which the slots (34′) in the cylindrical wall portion (26′) terminate in enlarged openings (39) in the end of the wall portion and the top of the cap (27′) is formed with indentations (40) which are disposed in the enlarged openings (39) and close the end of the slots (34′), the indentations serving as guides to indicate the rotary orientation of the receptacle.

8. A fastener receptacle according to any of claims 1 to 7, wherein the cylindrical wall portion (26) and the cap (27) of the casing are metallic.

## Patentansprüche

1. Befestigungshaube (18) eines Schnellverschlusses zur Herbeiführung eines Schutzes gegen Staub, Wetter und Radiowellendurchlässe und einer Gattung, die eine der Schließung dienende Haube (18) und einen Bolzen (15) mit einem Kopf (20) und einem daran abgebrachten Schaft (22) aufweist, der einen schraubenförmigen, sich von seinem freien Ende einwärts hineinstreckenden Kurvenschlitz (24) mit einer Schließschulter (25) trägt, wobei die Befestigungshaube (18) ein Schließmittel (35) zum Eingriff des schraubenförmigen Kurvenschlitzes (24) des Bolzens (15) bei der Benutzung enthält, welches (35) mit Hilfe einer Feder (36) in eine Richtung von dem Kopf des Bolzens (15) weg gedrängt wird und mit einem zylindrischen Gehäuse versehen ist, dadurch gekennzeichnet, daß der zylindrische Wandabschnitt (26) des Gehäuses eine Abdichtkappe (27) trägt, die das von dem Kopf des Bolzens (15) wegweisende Ende des Gehäuses einschließt, und mit einer Schulter (30) versehen ist, die einem geriffelten Zahnring (31), eine Nut (32) und einen Bund (33) unmittelbar neben der Schulter trägt und ein selbstfassendes Einpreßbefestigungsmittel am Ende des zylindrischen, dem Kopf des Bolzens benachbarten Wandabschnittes bildet.

2. Befestigungshaube nach Anspruch 1, bei der das Gehäuse ein Paar von sich diametral gegenüberliegenden, länglichen Schlitzen (34) an dem dem Kopf des Bolzens (15) abgewandten Ende enthält, bei der das Schließmittel (35) mit vorspringenden, in den Schlitzen (34) in der Wand liegenden Abschnitten versehen ist, so daß diese im Fall des Eingriffs des Kurvenschlitzes an dem Bolzen entlang der Schlitze verschiebbar sind, und bei der eine Schraubenfeder (36) innerhalb des Gehäuses angeordnet ist, die das Schließmittel (35) vorspannt und sich zwischen dem inneren Teil der Schulter (30) und dem Schließmittel erstreckt.

3. Befestigungshaube nach Anspruch 1 oder 2, bei der das Schließmittel aus einem Schließstift (35) besteht, der sich quer durch das Gehäuse erstreckt.

4. Befestigungshaube nach Anspruch 1 oder 2, bei der das Schließmittel aus einer Stiftplatte mit einer zentralen Öffnung und einem Paar von sich diametral gegenüberliegenden, nach innen weisenden Stiften zum Eingriff mit den Kurvenschlitzen (24) in dem Bolzen besteht und ein weiteres Paar von sich gegenüberliegenden, radial nach außen gerichteten Nasen jeweils in die länglichen Schlitze (34) eingreift.

5. Befestigungshaube nach einem der Ansprüche 1—4, bei der Abstandsmittel (37) zwischen dem Deckel der Kappe (27) und dem zylindrischen Wandabschnitt vorgesehen sind, um im Falle der Drehung zwischen den Schließ- und Öffnungslagen einen Freiraum für das Ende des Befestigungsbolzens (15) zu schaffen.

6. Befestigungshaube nach Anspruch 5, bei der die Schlitze (34) in dem zylindrischen Wandabschnitt bis zu dessen Ende reichen und das Abstandsmittel aus einem Ring (37) besteht, der an der Innenseite der Kappe (27) oberhalb des zylindrischen Wandabschnitts zur Verschließung der Enden der Schlitze (34) anliegt.

7. Befestigungshaube nach einem der Ansprüche 1—4, bei der die Schlitze (34') in dem zylindrischen Wandabschnitt (26') in vergrößerten Öffnungen (39) am Ende des Wandabschnittes enden, und der Deckel der Kappe (27') mit Einbuchtungen (40) versehen ist, die in den vergrößerten Öffnungen (39) liegen, die Enden der Schlitze (34') verschließen und als Anhalt zur Anzeige der Winkellage der Haube dienen.

8. Befestigungshaube nach einem der Ansprüche 1—7, bei der der zylindrische Wandabschnitt (26) und die Kappe (27) des Gehäuses aus Metall bestehen.

## Revendications

1. Cloche d'assemblage (18) d'une fixation à démontage rapide pour assurer une protection contre la poussière, les intempéries et la dispersion à basse fréquence et du type ayant une cloche (18) pouvant coopérer et un ergot (15) ayant une tête (20) et une tige assujettie (22) avec une rainure (24) de came hélicoïdale pourvue d'une saillie d'arrêt (25) s'étendant vers l'intérieur depuis son extrémité libre, la cloche d'assemblage (18) comportant un moyen de verrouillage (35) pour engager la rainure (24) de came hélicoïdale de l'ergot (15) utilisé, le moyen de verrouillage (35) étant poussé dans la direction opposée à la tête de l'ergot (15) par un ressort (36), et comprenant un boîtier cylindrique (26), caractérisée en ce que la paroi cylindrique (26) du boîtier a un chapeau d'étanchéité (27) fermant l'extrémité du boîtier à l'opposé de la tête de l'ergot (15), et est pourvue d'une saillie (30) ayant une bague dentée striée (31), une gorge (32) et une nervure (33) immédiatement contigues à la saillie réalisant un moyen de montage à force à accrochage automatique à l'extrémité de la paroi cylindrique contigue à la tête de l'ergot.

2. Cloche d'assemblage selon la revendication 1, dans laquelle le boîtier comporte deux encoches (34) longitudinales diamétralement opposées réalisées dans le boîtier près de son extrémité éloignée de la tête de l'ergot (15), le moyen de verrouillage (35) ayant des parties saillantes situées dans les encoches (34) de la paroi de manière à être mobiles le long des encoches lorsqu'elles coopèrent avec la rainure de came de l'ergot; un ressort hélicoïdal (36) étant situé à l'intérieur du boîtier pour appuyer sur le moyen de verrouillage (35) et s'étendant entre la partie interne de la saillie (30) et le moyen de verrouillage.

3. Cloche d'assemblage selon la revendication 1 ou la revendication 2, dans laquelle le moyen de verrouillage comporte une barre d'arrêt (35) traversant diamétralement le boîtier.

4. Cloche d'assemblage selon la revendication 1 ou la revendication 2, dans laquelle le moyen de verrouillage comporte une plaque à languettes ayant une ouverture et deux languettes diamétralement opposées dirigées radialement vers l'intérieur pour coopérer avec les rainures (24) de came de l'ergot, et deux autres languettes diamétralement opposées dirigées radialement vers l'extérieur et pénétrant dans les encoches longitudinales (34) respectives.

5. Cloche d'assemblage selon l'une quelconque des revendications 1 à 4, dans lequelle des moyens d'espacement (37) sont prévus entre le haut du chapeau (27) et la paroi cylindrique pour assurer un espace pour l'extrémité de l'ergot (15) de fixation quand il tourne entre les positions verrouillée et déverrouillée.

6. Cloche d'assemblage selon la revendication 5, dans laquelle les encoches (34) de la paroi cylindrique s'étendent jusqu'à l'extrémité de celles-ci et le moyen d'espacement est constitué d'une bague (37) placée autour de l'intérieur du chapeau (27) au-delà de la paroi cylindrique pour fermer les extrémités des encoches (34).

7. Cloche d'assemblage selon l'une quelconque des revendications 1 à 4, dans laquelle les encoches (34') de la paroi cylindrique (26') aboutissent dans des ouvertures (39) agrandies à l'extrémité de la paroi et le haut du chapeau (27') comporte des échancrures (40) situées dans les ouvertures agrandies (39) et qui ferment l'extrémité des encoches (34'), les échancrures servant de guides pour indiquer le sens de rotation de la cloche.

8. Cloche d'assemblage selon l'une quelconque des revendications 1 à 7, dans laquelle la paroi cylindrique (26) et le chapeau (27) du boîtier sont métalliques.

FIG. 1
27
37
35
36
34
26
34
28

FIG. 1A

26
30
31
32
33

FIG. 2

37
27
35
34
34
18
29
28
36
26
30
32
33
31
19

25
24
15
22
23
17
16
20

FIG. 3
4
27
18
35
29
28
22
36
19
23
16
15
20
4

FIG. 4
27
35
24
22
18
36
19
23
16
20
15

27
19

FIG.5

FIG.6

16
20

FIG.7
27'
40
35
36
39
34'
39
38
26'
34'
28
31

27'
40
35
34'
18'
29
28
26'
36
30
19
32
33
31
24
15
23
17
16
20

FIG. 8

FIG. 9

10
24
27'
40
34'
35
22
36
19
23
16
20
10

FIG. 10

40
24
27'
35
36
18'
19
16
20

27
40
19

FIG. 11

FIG. 12

20
16